# EUROPÄISCHE PATENTSCHRIFT

(11) **EP 0 745 225 B1**
(45) Veröffentlichungstag und Bekanntmachung des Hinweises auf die Patenterteilung: **13.02.2002**
(21) Anmeldenummer: 95937782.1
(22) Anmeldetag: 21.11.1995
(51) Int. Cl.: G01P 21/02

(54) **VERFAHREN ZUR FEHLERERKENNUNG BEI DREHZAHLFÜHLERN**
ERROR RECOGNITION PROCESS FOR SENSORS OF SPEED OF ROTATION
PROCEDE DE RECONNAISSANCE D'ERREURS POUR CAPTEURS DE LA VITESSE DE ROTATION

(30) Priorität: 14.12.1994 DE 4444408
(43) Veröffentlichungstag der Anmeldung: 04.12.1996
(73) Patentinhaber: ROBERT BOSCH GMBH, 70442 Stuttgart (DE)
(72) Erfinder: PFAU, Martin, D-71287 Weissach (DE)
(86) Internationale Anmeldenummer: DE9501615
(87) Internationale Veröffentlichungsnummer: WO9618908

(56) Entgegenhaltungen:
- EP-A- 0 193 335
- WO-A-86/06172

## Beschreibung

### Stand der Technik

Es ist bekannt, daß Drehzahlfühler, insbesondere Raddrehzahlfühler, die Informationen für sicherheitsrelevante Systeme wie ABS liefern, auf Fehlfunktion überwacht werden müssen. Fehlfunktionen können auftreten, wenn Störsignale eingestreut werden oder wenn Leitungsunterbrechungen oder ähnliches auftreten.

Da die Drehzahl üblicherweise aus der Zeit zwischen den vom Sensor gelieferten Signalflanken ermittelt wird, würde ein ausbleibendes Drehzahlfühlersignal bei der Geschwindigkeitsberechnung auf dem Zeitabstand zwischen zwei Signalflanken zu einer zu kleinen Drehzahl bzw. Radgeschwindigkeit führen. Bei ABS-Systemen würde dann ein fehlerhafter Druckabbau am betreffenden Rad erfolgen und zu Unsicherheiten führen.

Aus diesem Grund wird beispielsweise in der deutschen Patentanmeldung DE-P 44 05 801.2 vorgeschlagen, bei einem Antiblockierregelsystem das Ausgangssignal des Raddrehzahlfühlers dahingehend zu überwachen, daß zum einen geprüft wird, ob zwischen einzelnen Impulsen des Sensorsignales eine plausible Zeit verstreicht. Weiterhin wird überprüft, ob bei Radhochlauf physikalisch unmögliche Änderungswerte auftreten. Davon abhängig werden zwei unterschiedliche Vergleichsschwellen abwechselnd wirksam gemacht, in Abhängigkeit von der Feststellung, ob das Rad kontinuierlich hochläuft oder nicht.

Weitere bekannte Lösungen zur schnellen Erkennung fehlender Sensorsignale beruhen im wesentlichen auf der Berechnung einer unplausibel hohen Radverzögerung. Es wird dann eine ungefilterte Radgeschwindigkeit aus der Zeit zwischen den letzten beiden eingetroffenen Flanken des Sensorsignales berechnet. Trifft über eine bestimmte Zeit keine Flanke ein, kann eine Flanke theoretisch gesetzt werden, die im günstigsten Fall zu diesem Zeitpunkt eintreffen würde. Aus einem so konstruierten Zeitintervall kann dann eine neue Radgeschwindigkeit berechnet werden. Aus der Differenz zur zuletzt berechneten Radgeschwindigkeit ergibt sich damit eine bestimmte Radverzögerung.

Daraus kann umgekehrt für jede Geschwindigkeit bei einer vorgegebenen zulässigen Radverzögerung ein Zeitintervall bestimmt werden, in dem die nächste Flanke eintreffen muß. Diese Verfahren zur dynamischen Sensorüberwachung sind mehr oder weniger vereinfachte oder an die entsprechende Geschwindigkeitsberechnung angepaßte Abfragen einer maximal zulässigen Zeitspanne zwischen zwei aufeinanderfolgenden Flanken. Ein solches Verfahren wird im übrigen in der EP 0 193 335 D1 beschrieben.

Bei den herkömmlichen Verfahren müssen sehr hohe Radverzögerungen bzw. entsprechende Zeiten abgefragt werden, um fälschliches Ansprechen zu vermeiden. Wenn die erforderlichen Überwachungsschwellen oder Überwachungszeiten jedoch zu groß sind, kann eine sporadisch auftretende Sensorunterbrechung nicht mehr erkannt werden. Dies ist ein Nachteil der bekannten Verfahren, insbesondere da in der Praxis große Radverzögerungen auftreten, wenn aus hoher Geschwindigkeit auf einem Untergrund mit hohem Reibwert abgebremst wird und mit dem eingeregelten Bremsdruck ein Reibwertsprung zu sehr niedrigem Reibwert stattfindet, wenn beispielsweise das Rad von der Fahrbahn abhebt.

Aus der WO, A, 86 06 172 ist ein Verfahren zur Überwachung eines Drehzahlgeber-Signales zur Ermittlung der Raddrehzahl eines Fahrzeuges bekannt, bei dem zwei aufeinanderfolgende Fehlererkennungen ablaufen. Zunächst wird geprüft, ob die Drehzahl oberhalb eines vorgebbaren Schwellwertes liegt. Ist dies nicht der Fall, wird davon ausgegangen, daß das Fahrzeug bei dem der zu überwachende Drehzahlgeber eingesetzt wird, sich noch im Startfall befindet und es wird eine Fehlererkennung so lange unterdrückt, bis erkannt wird, daß der Startfall abgeschlossen ist.

Nach Überschreiten der Drehzahlschwelle wird eine zweite Fehlererkennung bzw. Plausibilitätsuntersuchung durchgeführt, bei der überprüft wird, ob ein neuer Drehzahlwert innerhalb vorgebbarer Grenzen liegt, wobei die Grenzen anhand der vorhergehenden Drehzahl festgelegt werden. Da sowohl Zeitwerte als auch zu den Zeitwerten umgekehrt proportionale Drehzahlwerte berücksichtigt werden, wird eine vereinfachte Auswertung möglich. Sowohl die Drehzahlwerte als auch die Zeitabstände lassen sich über eine Proportionalitätskonstante ineinander umrechnen, so daß es sich bei der Fehlererkennung nicht um die Auswertung von gefilterten Größen handelt.

### Vorteile der Erfindung

Das erfindungsgemäße Verfahren mit den Merkmalen des Hauptanspruchs hat demgegenüber den Vorteil, daß es sicher ist gegen fälschliches Ansprechen der Fehlererkennung bei gleichzeitig kleineren Überwachungsschwellen oder Überwachungszeiten, mit denen ein tatsächlicher Sensorausfall erkannt werden soll. Dies ist möglich, da eine Radentlastung oder ein Übergang zu niedrigem Reibwert nie schlagartig stattfindet.

Es ist also in besonders vorteilhafter Weise möglich, zu erkennen, ob ausbleibende Sensorsignale die Folge einer physikalischen Radverzögerung oder einer Unterbrechnung des Sensorsignales sind.

Erzielt werden die Vorteile, indem eine dynamische Sensorüberwachung stattfindet, bei der gefilterte und ungefilterte Größen auf Plausibilität überwacht werden. Diese Größen sind in vorteilhafter Weise die ungefilterte Radgeschwindigkeit, die gefilterte Radgeschwindigkeit und die gefilterte Änderung (Ableitung) der Radgeschwindigkeit, also die gefilterte Beschleunigung.

Weitere Vorteile der Erfindung werden mit Hilfe der in den Unteransprüchen angegebenen Maßnahmen erzielt.

### Zeichnung

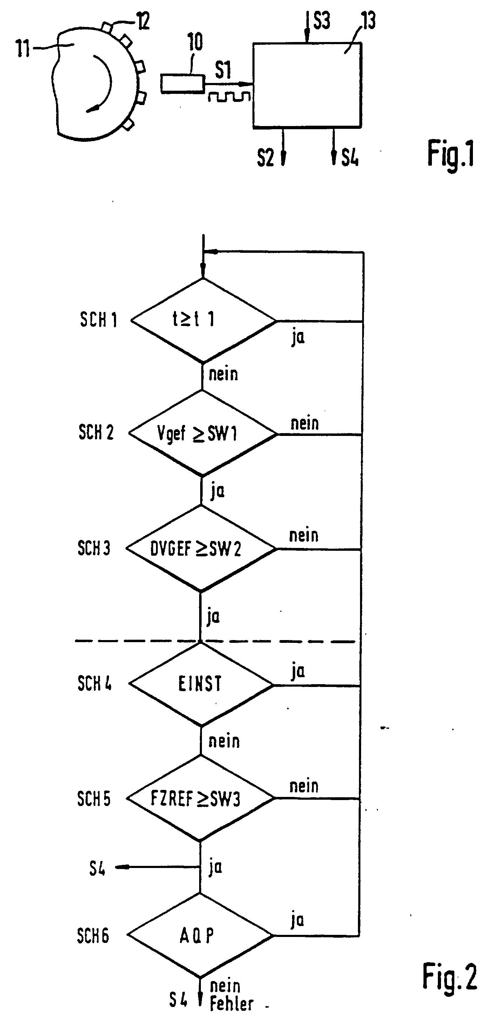

Ein Ausführungsbeispiel der Erfindung ist in der Zeichnung dargestellt und wird in der nachfolgenden Beschreibung näher erläutert. Es zeigt dabei im einzelnen Figur 1 ein Blockschaltbild einer Anordnung, in der das erfindungsgemäße Verfahren abläuft und Figur 2 ein Flußdiagramm eines Ausführungsbeispieles eines Verfahrens zur Fehlererkennung bei Drehzahlfühlern.

### Beschreibung

In Figur 1 ist schematisch eine Anordnung dargestellt, mit der das Ausgangssignal (Sensorsignal) S1 eines Drehgeschwindigkeitssensors 10 ausgewertet werden soll. Dieser Drehgeschwindigkeitssensor 10 erfaßt beispielsweise die Rotationsgeschwindigkeit eines Rades, indem eine mit Radgeschwindigkeit umlaufende Scheibe 11 mit einer Anzahl von Zähnen 12 abgetastet wird.

In der Auswerteanordnung 13, in der die erfindungsgemäßen Verfahren ablaufen, wird das Sensorsignal S1 ausgewertet. Dabei werden aus dem zeitlichen Abstand der Flanken des Sensorsignales S1 in üblicher Weise Drehzahlwerte berechnet. Ausgehend aus diesen Drehzahlwerten werden in der Auswerteanordnung 13 Ansteuersignale S2 beispielsweise für ein ABS-System gebildet, wobei weitere Signale, die als S3 bezeichnet werden, in der Auswerteanordnung mitverwertbar sind.

In der Auswerteanordnung 13 wiederholen sich die Auswertungen in einem Zyklenabstand von t1 = 10 ms, wobei die Zeit t1 als beispielhafter Wert anzusehen ist.

Soll mit der in der Figur 1 dargestellten Anordnung die Radgeschwindigkeit bei einem Kraftfahrzeug gemessen werden, kann davon ausgegangen werden, daß der Radumfang etwa 2 m ist. Wird mit einer Zähnezahl an der Scheibe 11 von beispielsweise 48 ausgegangen, muß bei einer Fahrzeuggeschwindigkeit von mehr als 7,5 km/h innerhalb der Zykluszeit von 10 ms mindestens ein Impuls auftreten. Ausgehend von dieser Erkenntnis beginnen die erfindungsgemäßen Verfahren zur Erkennung eines Sensorfehlers infolge eines ausbleibenden Sensorsignales.

In Figur 2 ist ein Blockschaltbild eines solchen Verfahren aufgezeigt, das in der Auswerteanordnung 13 abläuft.

Ausgehend vom Sensorsignal S1, das als Rechtecksignal angesehen werden kann und die Oberfläche der Scheibe 11 widerspiegelt, wird in der Auswerteanordnung 13 im ersten Schritt SCH1 überprüft, ob innerhalb der Zykluszeit t1 eine Signalflanke auftritt. Ist dies der Fall, beginnt das Auswerteprogramm den Schritt SCH1 von neuem. Wird dagegen erkannt, daß innerhalb der Zykluszeit im zurückliegenden 10 ms-Zyklus (n-1) keine Signalflanke aufgetreten ist, wird im Schritt SCH2 geprüft, ob im aktuellen Zyklus n die gefilterte Radgeschwindigkeit Vgef am betreffenden Rad größer ist als ein erster Schwellwert SW1, der beispielsweise 40 km/h beträgt.

Die gefilterte Radgeschwindigkeit Vgef wird unabhängig vom Verfahren zur Fehlererkennung in der Auswerteanordnung 13 aus der ungefilterten Radgeschwindigkeit Vung berechnet. Die ungefilerte Radgeschwindigkeit Vung wird aus den zeitlichen Abstand der Flanken des Sensorsignales S1 in üblicher Weise berechnet.

Die Geschwindigkeit von 40 km/h als Schwellwert SW1 ist ein empirischer Wert und erfordert eine Überwachungszeit von 10 ms, also gerade der Zykluszeit.

Wird im Schritt SCH2 erkannt, daß die gefilterte Radgeschwindigkeit kleiner ist als 40 km/h, beginnt das Programm von neuem mit Schritt SCH1. Wird dagegen erkannt, daß die gefilterte Radgeschwindigkeit Vgef größer oder gleich ist als 40 km/h wird im Schritt SCH3 geprüft, ob die gefilterte und abgeleitete Geschwindigkeitsänderung DVGEF im betreffenden Zyklus am betreffenden Rad größer ist als ein weiterer Schwellwert SW2, z.B. -10 km/h.

Die gefilterte, abgeleitete Geschwindigkeit DVGEF (n) wird gebildet aus der Differenz der beiden gefilterten Radgeschwindigkeiten Vgef 10 ms (n) - Vgef 10 ms (n-1).

Wird im Schritt SCH3 erkannt, daß die gefilterte Radgeschwindigkeitsänderung den Schwellwert SW2 überschreitet, wird im Schritt SCH4 überprüft, ob für das betreffende Rad eine Fehlererkennung wegen erkannter Einstreuung eines Störsignales gesetzt ist. Ist keine Fehlererkennung gesetzt, wird im Schritt SCH5 geprüft, ob die Fahrzeugreferenzgeschwindigkeit FZREF größer ist als ein Schwellwert SW3, der beispielsweise ebenfalls 40 km/h beträgt.

Ist auch diese Bedingung erfüllt, wird entweder bereits eine Fehlererkennung S4 ausgelöst oder es wird in einem zusätzlichen Schritt SCH6 überprüft, ob eine Aquaplaning-Erkennung am betreffenden Rad vorliegt. Liegt keine vor, wird in diesem Fall die Fehlererkennung S4 ausgelöst.

Wird in den Schritten SCH4, 5 und 6 jeweils auf nein erkannt, springt das Programm an den Anfang zurück.

Die in den Schritten SCH4, 5 und 6 benötigten Informationen werden in der Auswerteeinrichtung 13 unabhängig vom Fehlererkennungsverfahren gewonnen. So wird beispielsweise mit Hilfe einer getrennten Fehlererkennung erkannt, ob Fehleinstreuungen vorliegen. Weiterhin wird aus den ermittelten Radgeschwindigkeiten eine Fahrzeugreferenzgeschwindigkeit FZREF in üblicher Weise gebildet, beispielsweise ausgehend von der Geschwindigkeit des zweitschnellsten Rades. Ob Aquaplaning vorliegt oder nicht, kann ebenfalls durch getrennte Bedingungen erkannt werden.

Mit den beschriebenen Verfahren kann also ein plötzlich ausbleibendes Sensorsignal als Sensorfehler erkannt werden. Es wird dabei gefordert, daß mindestens 10 ms lang keine Flanke des Sensorsignales S1 aufgetreten ist. Diese Bedingung wird bei jeder Geschwindigkeit kleiner als 7,5 km/h zyklusweise erfüllt. Es wird deshalb durch zusätzliche Bedinungen bezüglich der Vorgeschichte abgesichert, daß sich die Radgeschwindigkeit plötzlich verringert hat, wie es infolge physikalisch möglicher Radverzögerung nicht plausibel ist. Der vorgeschlagene Vergleich von gefilterten Größen, also der Erkennung der Radverzögerung und ungefilterter Größen, also eines Geschwindigkeitssprunges, wird die zusätzlich gewünschte Absicherung erreicht. Ist der DVGEF-Wert der gefilterten Geschwindigkeit betragsmäßig klein, kann davon ausgegangen werden, daß nicht seit mehreren 10 ms-Zyklen ein steiler Radeinlauf vorliegt. Wenn aber keine hohe Radverzögerung vorliegt, kann die ungefilterte Geschwindigkeit von der gefilterten nur bei Einstreuungen oder bei unterbrochenem Signal stark nach unten abweichen.

## Patentansprüche

1. Verfahren zur Fehlererkennung bei Drehzahlfühlern (10), die ein Ausgangssignal (S1) abgeben, das aus einer Folge von Impulsen besteht und mit einer vorgebbaren Zykluszeit (t1) verarbeitet wird, wobei in einem ersten Schritt (SCH1) überprüft wird, ob in der vorhergehenden Zykluszeit (t1) eine Impulsflanke aufgetreten ist, **dadurch gekennzeichnet, daß** sofern im ersten Schritt (SCH1) erkannt wird, daß innerhalb der Zykluszeit (t1) keine Impulsflanke aufgetreten ist, weitere Schritte durchgeführt werden, zur Erkennung vorgebbarer Bedingungen, bei denen gefilterte Größen und ungefilterte Größen, die jeweils aus der vorhergehenden Zykluszeit (t1(n-1)) oder der aktuellen Zykluszeit (t1(n)) ermittelt werden, gemeinsam ausgewertet werden und bei Erkennung, daß wenigstens eine der vorgebbaren Bedingung erfüllt ist, ein Fehlersignal (S4) abgegeben wird.

2. Verfahren zur Fehlererkennung bei Drehzahlfühlern, nach Anspruch 1 **dadurch gekennzeichnet, daß** aus dem zeitlichen Abstand vorgebbarer Impulsflanken Radgeschwindigkeiten ermittelt werden und zur Fehlererkennung in Schritt (SCH2) geprüft wird, ob die aus einer Radgeschwindigkeit gebildet gefilterte Radgeschwindigkeit (Vgef) einen ersten Schwellwert (SW1) überschreitet, daß weiterhin in Schritt (SCH3) geprüft wird, ob die zeitliche Ableitung zwischen der im vorhergehenden Zyklusintervall gebildeten gefilterten Radgeschwindigkeit und der im aktuellen Zyklus ermittelten gefilterten Radgeschwindigkeit (DVGEF) einen zweiten Schwellwert (SW2) überschreitet und bei Erfüllung der drei Bedingungen eine Fehlererkennung (S4) ausgegeben wird.

3. Verfahren zur Fehlererkennung bei Drehzahlfühlern nach einem der vorhergehenden Ansprüche, **dadurch gekennzeichnet, daß** die Schwellwerte (SW1, SW2) als plausible Größen im Zusammenhang mit Vorgängen bei einer Antiblockier-Regelung bei Kraftfahrzeugen definiert werden.

4. Verfahren zur Fehlererkennung bei Drehzahlfühlern nach einem der vorhergehenden Ansprüche, **dadurch gekennzeichnet, daß** zusätzliche Fehlererkennungen ablaufen, die elektromagnetische Einstreuungen in das Sensorsignal erkennen lassen und eine Fehlererkennung nur dann durchgeführt wird, wenn keine Einstreuungen erkannt wurden.

5. Verfahren zur Fehlererkennung bei Drehzahlfühlern nach einem der vorhergehenden Ansprüche, **dadurch gekennzeichnet, daß** die Fehlererkennung nur dann durchgeführt wird, wenn erkannt wird, daß die Fahrzeugreferenzgeschwindigkeit (FZREF) oberhalb eines dritten Schwellwertes (SW3)liegt.

6. Verfahren zur Fehlererkennung bei Drehzahlfühlern nach einem der vorhergehenden Ansprüche, **dadurch gekennzeichnet, daß** zusätzlich eine Überwachung stattfindet, die das Auftreten von Aquaplaning erkennen läßt und eine Fehlererkennung nur dann durchgeführt wird, wenn kein Aquaplaning erkannt ist.

7. Verfahren zur Fehlererkennung bei Drehzahlfühlern nach einem der vorhergehenden Ansprüche, **dadurch gekennzeichnet, daß** die Zykluszeit (t1) bei vorgebbaren Geschwindigkeiten variiert wird.

## Claims

1. Method for detecting faults in rotational speed sensors (10) which emit an output signal (S1) which comprises a sequence of pulses and is processed with a predefinable cycle time (t1), in which in a first step (SCH1) it is checked to determine whether a pulse edge has occurred in the preceding cycle time (t1), **characterized in that** if it is detected in the first step (SCH1) that no pulse edge has occurred within the cycle time (t1), further steps are carried out in order to detect predefinable conditions under which filtered variables and unfiltered variables, which are respectively determined from the preceding cycle time (t1(n-1)) or the current cycle time (t1(n)), are evaluated jointly and in the event of detection that at least one of the predefinable conditions is fulfilled a fault signal (S4) is emitted.

2. Method for detecting faults in rotational speed sensors according to Claim 1, **characterized in that** wheel speeds are determined from the time interval between predefinable pulse edges, and, in order to detect faults, in step (SCH2) it is tested whether the filtered wheel speed (Vgef) formed from a wheel speed exceeds a first threshold value (SW1), **in that**, in addition, in step (SCH3) it is tested to determine whether the chronological derivation between the filtered wheel speed formed in the preceding cycle interval and the filtered wheel speed (DVGEF) determined in the current cycle exceeds a second threshold value (SW2), and in the event of three conditions being fulfilled a fault condition (S4) is output.

3. Method for detecting faults in rotational speed sensors according to one of the preceding claims, **characterized in that** the threshold values (SW1, SW2) are defined as plausible variables in conjunction with processes in an anti-lock control in motor vehicles.

4. Method for detecting faults in rotational speed sensors according to one of the preceding claims, **characterized in that** additional fault detections occur which enable electromagnetic interference in the sensor signal to be detected, and a fault detection is carried out only if no interference has been detected.

5. Method for detecting faults in rotational speed sensors according to one of the preceding claims, **characterized in that** the fault detection is carried out only if it is detected that the vehicle reference speed (FZREF) lies above a third threshold value (SW3).

6. Method for detecting faults in rotational speed sensors according to one of the preceding claims, **characterized in that** there is additionally monitoring which enables the occurrence of aquaplaning to be detected, and a fault detection is carried out only if no aquaplaning is detected.

7. Method for detecting faults in rotational speed sensors according to one of the preceding claims, **characterized in that** the cycle time (t1) is varied at predefinable velocities.

## Revendications

1. Procédé de reconnaissance d'erreur dans un capteur de vitesse de rotation (10) fournissant un signal de sortie (S1) constitué par une suite d'impulsions et qui est traité selon une durée de cycle prédéterminée (t1),
selon lequel, dans une première étape (SCH1), on vérifie si, pendant la durée de cycle précédente (t1), il y a eu un flanc d'impulsion,
**caractérisé en ce que**
dans la mesure où, dans la première étape (SCH1), on a reconnu qu'à l'intérieur de la durée de cycle (t1) il n'y a pas eu de flanc d'impulsion, on exécute d'autres étapes pour reconnaître des conditions prédéterminées dans lesquelles on a exploité en commun des grandeurs filtrées et des grandeurs non filtrées obtenues chaque fois à partir de la durée de cycle précédente (t1(n-1)) ou de la durée de cycle actuelle (t1(n)), et lorsqu'on reconnaît qu'au moins une condition précédente est satisfaite, on émet un signal d'erreur (S4).

2. Procédé de reconnaissance d'erreur dans un capteur de vitesse de rotation selon la revendication 1,
**caractérisé en ce qu'**
à partir de l'intervalle de temps entre des flancs d'impulsion prédéterminés on détermine la vitesse de roue et, pour reconnaître une erreur, on vérifie dans l'étape (SCH2) si la vitesse de roue filtrée (Vgef) formée à partir d'une vitesse de roue, dépasse un premier seuil (SW1),
dans une étape (SCH3) on vérifie si la dérivée en fonction du temps entre la vitesse de roue filtrée, formée dans l'intervalle de cycle précédent, et la vitesse de roue filtrée (DVGEF) obtenue dans le cycle actuel, dépassent un second seuil (SW2) et, si les trois conditions sont satisfaites, on émet une reconnaissance d'erreur (S4).

3. Procédé de reconnaissance d'erreur dans un capteur de vitesse de rotation selon l'une quelconque des revendications précédentes,
**caractérisé en ce qu'**
on définit les valeurs de seuil (SW1, SW2) comme grandeurs plausibles en relation avec les opérations effectuées dans une régulation antiblocage de véhicules automobiles.

4. Procédé de reconnaissance d'erreur dans un capteur de vitesse de rotation selon l'une quelconque des revendications précédentes,
**caractérisé en ce qu'**
on effectue des reconnaissances d'erreur supplémentaires qui permettent de déceler des parasites électromagnétiques injectés dans le signal de capteur, et on effectue une reconnaissance d'erreur seulement si aucune injection de parasite n'a été décelée.

5. Procédé de reconnaissance d'erreur dans un capteur de vitesse de rotation selon l'une quelconque des revendications précédentes,
**caractérisé en ce qu'**
on effectue la reconnaissance d'erreur seulement si l'on a reconnu que la vitesse de référence du véhicule (FZREF) se situe au-dessus d'un troisième seuil (SW3).

6. Procédé de reconnaissance d'erreur dans un capteur de vitesse de rotation selon l'une quelconque des revendications précédentes,
**caractérisé en ce qu'**
en plus on effectue une surveillance qui permet de reconnaître l'existence d'une situation d'aquaplaning, et on effectue une reconnaissance d'erreur seulement si aucun aquaplaning n'est reconnu.

7. Procédé de reconnaissance d'erreur dans un capteur de vitesse de rotation selon l'une quelconque des revendications précédentes,
**caractérisé en ce qu'**
on modifie la durée de cycle (t1) pour des vitesses prédéterminées.
